# EUROPEAN PATENT APPLICATION

(11) **EP 4 610 510 A1**
(43) Date of publication of application: **03.09.2025**
(21) Application number: 24382215.2
(22) Date of filing: 28.02.2024
(51) Int. Cl.: F16C 19/16, B66C 23/84, E02F 9/12, F16C 33/66, F16C 33/37, F16C 43/06

(54) **SLEWING BEARING**

(71) Applicant: TGB Group Technologies, S.L., 08798 Sant Cugat Sesgarrigues (Barcelona) (ES)
(72) Inventor: Lucas Morata, Francisco, 08798 Sant Cugat Sesgarrigues (BARCELONA) (ES)
(74) Representative: Pons IP

(57) **Abstract**

The invention relates to a slewing bearing comprising an inner ring (1) capable of rotating with respect to an outer ring (2), a rolling raceway (3) configured between the two rings (1, 2), intended for housing the spheres (4) of a rolling element, and spacers (7) located between every two spheres (4), wherein the slewing bearing further comprises a first injector (8) communicating the rolling raceway (3) with the outside, a conduit (6) communicating the rolling raceway (3) with the outside, for the insertion of the spheres (4) and the spacers (7), and a plug (5) intended for closing the conduit (6).

## Description

### OBJECT OF THE INVENTION

The present invention relates to a slewing bearing that does not need to be lubricated throughout its entire service life, but only during the time of being manufactured, when lubricant is incorporated in the rolling raceway which houses the bearings.

### BACKGROUND OF THE INVENTION

Mechanisms formed by contacting elements having relative movement between them must be greased to improve friction. This does not only lead to an improved movement *per se,* but also to a controlled temperature increase, due to reduced friction between the parts, acting as a coolant in a way.

Furthermore, it is also known in the state of the art that the mechanisms must be frequently greased, since the oil used gets dirty, evaporates or is simply lost through a joint in the container where it is housed.

Therefore, periodic maintenance must always be performed in order to keep the machines in good condition.

Advancements in this field have focused on the development of more long-lasting oils, as well as containers where losses due to leaks are reduced to a minimum.

Document CN211648802 describes an integrated slewing bearing that is convenient and fast to use. The bearing comprises an inner ring, an outer ring, and plugs. The outer wall of the inner ring is fixedly connected with an annular mounting base; an arc-shaped first mounting groove is formed in the mounting base; wherein the outer ring is rotationally connected outside the inner ring. The inner wall of the outer ring is provided with an inserting groove corresponding to the mounting base; a second mounting groove corresponding to the first mounting groove is formed in the bottom of the inserting groove. The outer ring is further provided with a through insertion hole pointing to the circle centre of the outer ring. The plug is inserted into the insertion hole. An oil hole is formed in the plug; an oil cup is connected in the oil hole; the plug is connected with the outer ring through a taper pin; in the assembling process of the device, the balls of the bearing are installed through the insertion holes, then the plugs are inserted into the insertion holes, the oil cups are connected into the oil holes to inject lubricating grease, after lubricating grease injection is completed, the plugs are fixed through the taper pins, and the oil cups can be left in the oil holes to be used as plugs of the oil holes.

Document WO23103389 describes a raceway oil removal structure for a slewing bearing, a sealing plug, and an oil removing method. The oil removal structure comprises: a supporting block, which is adapted to be placed in a rolling raceway; and a cleaning piece, which has an annular structure and is arranged on the supporting block, the cleaning piece being adapted to be matched with the inner wall of the rolling raceway of the slewing bearing. In the above structure, the cleaning piece can remove an old lubricating grease in the rolling raceway, thereby avoiding mixed use of new and old lubricating greases, and ensuring subsequent lubrication performance. According to the technical solution in the present application, the problems in the prior art that the new lubricating grease is wasted during lubricating grease replacement of a slewing bearing and the lubrication performance is affected by mixed use of the new and old lubricating greases are solved.

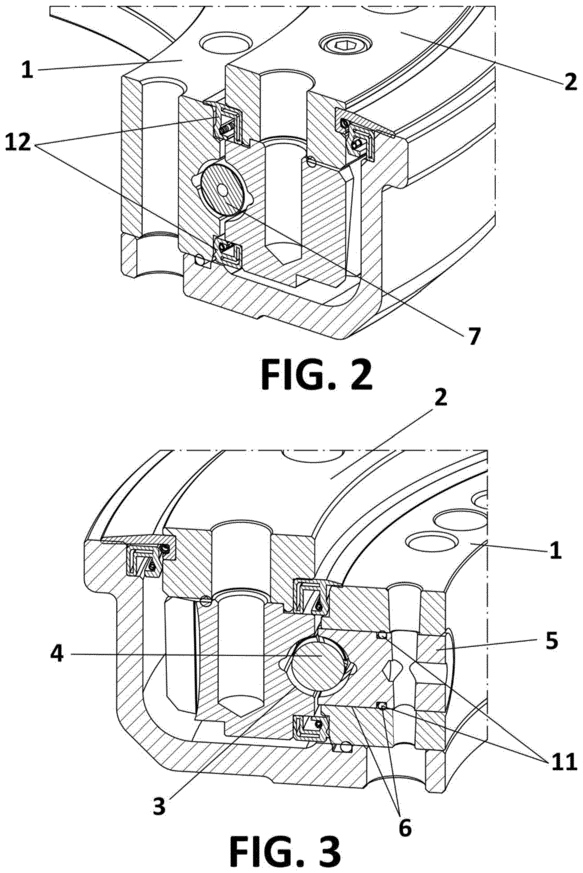

Document GB800428 describes a slewing bearing for a crane or excavator comprises two coaxial sets of tapered rollers 9, 10, mounted to run on surfaces 5, 6 and 7, 8, respectively, the four surfaces being formed on separate bearing rings 19, 20 and 17, 18. The ring 17 is secured to the ring 19 by means of screws 24 and to the undercarriage 3 by means of screws 25. The rings 16, 18 are similarly secured to the superstructure 1, shims 27 being inserted to give the required pre-loading stress on the rollers to prevent pitting of the race paths. The two pairs of rings are spigoted together at 22, 23 to prevent slipping. Grease seals 26, 28, 29, 30 are provided and a grease-filled labyrinth 31 prevents the entry of dirt or water into the bearing. The ring 17 carries internal teeth 40 for meshing with a slewing pinion on the superstructure. In a modification (Figure 3, not shown), the two inner bearing rings are attached to the superstructure and the outer pair to the undercarriage, the lower ring of this pair having external slewing teeth.

However, these documents do not solve the problems of requiring periodic and continuous maintenance which, if not performed, can lead to a breakdown that can be decisive.

### DESCRIPTION OF THE INVENTION

The present invention describes a slewing bearing comprising an inner ring capable of rotating with respect to an outer ring, a rolling raceway configured between the two rings, intended for housing the spheres of a rolling element, and spacers located between every two spheres.

The slewing bearing further comprises a first injector communicating the rolling raceway with the outside, a conduit communicating the rolling raceway with the outside, a plug intended for closing the conduit.

Preferably, the slewing bearing also comprises a second injector communicating the rolling raceway with the outside.

Preferably, the first injector is located on the inner surface of the inner ring, and the second injector on the side surface of the outer ring, such that the area and angle for injecting lubricant into the slewing bearing can be selected.

Preferably, the plug comprises an O-ring to improve leaktightness and prevent lubricant leaks.

Furthermore, the slewing bearing can also incorporate a closure communicating the inside of the slewing bearing with the outside.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
- Figure 1: shows a perspective view of the slewing bearing of the invention.
- Figure 2: shows a cross-section view of the slewing bearing of the invention, showing the two rings with the rolling raceway and the lubricant seals.
- Figure 3: shows a cross-section view of the slewing bearing of the invention, showing, in addition to the elements of Figure 3, the plug for accessing the rolling raceway for the insertion of the rolling elements and the spacers.
- Figure 4: shows a section view perpendicular to the axis of rotation of the slewing bearing of the invention, showing a lubricant injection conduit and a closure for closing access to the inside of the slewing bearing.
- Figure 5: shows a cross-section view of the slewing bearing of the invention, showing two lubricant injection conduits.

A list of the different elements depicted in the figures with the reference numbers associated therewith is provided below:
1. inner ring.
2. Outer ring.
3. Rolling raceway.
4. Spheres of the rolling element.
5. Plug.
6. Conduit.
7. Spacers.
8. First injector.
9. Second injector.
10. Closure.
11. Sealing gasket.
12. Lubricant seal.

### PREFERRED EMBODIMENT OF THE INVENTION

The present invention relates to a slewing bearing in which neither the rolling raceway nor the rolling elements incorporated therein must be lubricated throughout their entire service life, but only during the manufacturing process before being put on the market.

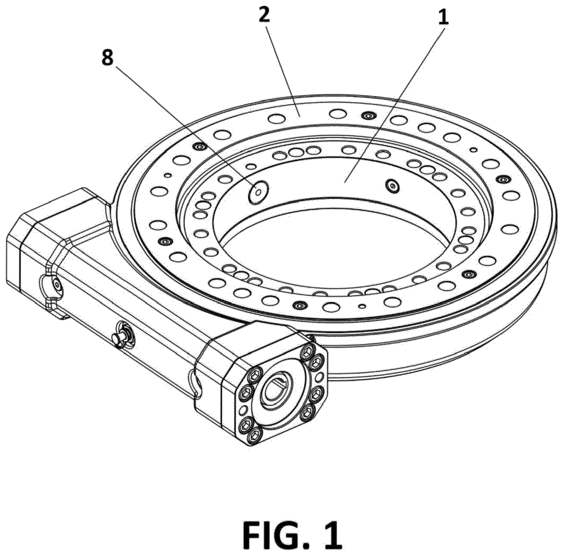

As depicted in Figure 1, the slewing bearing of the invention comprises an inner ring (1) representing the movable element of the bearing and an outer ring (2) representing the fixed element of the bearing. There is generated between the inner ring (1) and the outer ring (2) a rolling raceway (3) intended for housing the spheres (4) of a rolling element whereby the movement of the inner ring (1) with respect to the outer ring (2) is facilitated.

The outer ring (2) is integral with an element intended to enable fixing the slewing bearing to external means.

A plug (5) which closes a conduit (6) communicating the rolling raceway (3) with the outside and a first injector (8) for the incorporation of lubricant in the rolling raceway (3) can also be seen in this figure.

Figure 2 depicts a detail of the rolling raceway (3) with the lubricant seals (12).

Figure 3 depicts a detail of the plug (5) housed in the conduit (6) for closing it. The plug (5) incorporates a sealing gasket (11) to prevent the lubricant from leaking out. The functionality of the conduit (6) is to serve as a channel for introducing the spheres (4) of the rolling element in the rolling raceway (3) and the spacers (7) located between the spheres (4).

The spacers (7) have a cylindrical configuration with hollowed-out bases in the form of a spherical cap, such that they serve to house the spheres (4) of the rolling element on both sides. Furthermore, the spacers (7) also incorporate a hole that goes through same and grooves intended for retaining oil between the spheres (4) and thereby improving lubrication.

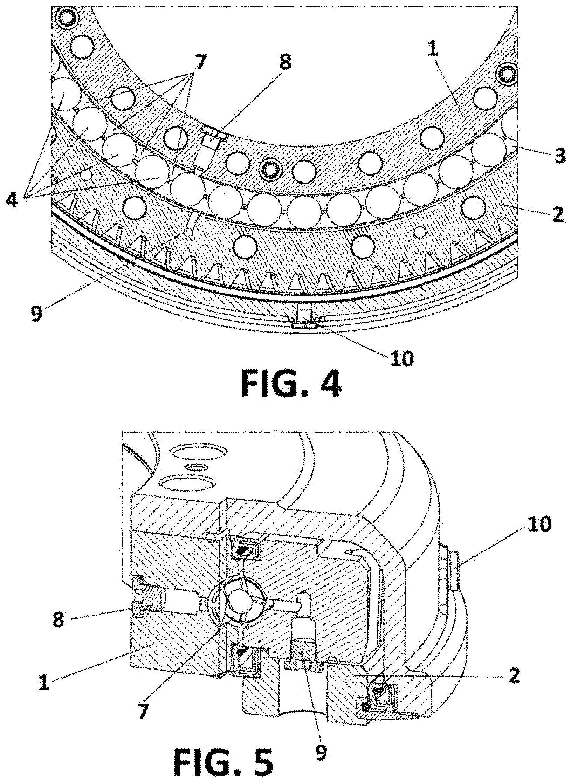

Figure 4 depicts a section of the rings (1, 2) perpendicular to the slewing axis of the bearing, such that the rolling raceway (3) and the spheres (4) of the rolling element can be seen more clearly. The spheres (4) of the rolling element are spaced apart by means of the spacers (7) which, in this section, cannot be seen clearly, since the bearing has been sectioned through the middle of the spheres (4) and the spacers (7), showing only the central hole which they incorporate.

The first lubricant injector (8), located on the inner face of the inner ring (1), having direct access to the rolling raceway (3), can also be clearly seen in this Figure 4.

A second injector (9), located in the flat area of the outer ring (2), with access perpendicular to that of the first injector (8), such that the introduction of lubricant in the rolling raceway (3) is more versatile and the lubricant can be introduced from any of the two injectors (8, 9), can also be seen in this Figure 4. in any case, as indicated, the lubricant is introduced only in the process of manufacturing the slewing bearing, so this is a consideration at the production level only. Once the slewing bearing has been manufactured, it is not necessary to introduce more lubricant later on.

Figure 5 shows the configuration of the slewing bearing with the two rings, the rolling raceway (3) where the spheres (4) of the rolling element and the spacers (7) are arranged, the injectors (8, 9), and a closure (10) for accessing the inside of the slewing bearing with the function of enabling the coupling of accessories and of releasing internal pressures, where necessary. This closure (10) can also be seen in Figure 4.

## Claims

1. A slewing bearing comprising an inner ring (1) capable of rotating with respect to an outer ring (2), a rolling raceway (3) configured between the two rings (1, 2), intended for housing the spheres (4) of a rolling element, and spacers (7) located between every two spheres (4), the slewing bearing being **characterised in that** it further comprises:
- a first injector (8) communicating the rolling raceway (3) with the outside,
- a conduit (6) communicating the rolling raceway (3) with the outside,
- a plug (5) intended for closing the conduit (6).

2. The slewing bearing according to claim 1, wherein the first injector (8) is located on the inner surface of the inner ring (1).

3. The slewing bearing according to claim 1, comprising a second injector (9) communicating the rolling raceway (3) with the outside.

4. The slewing bearing according to claim 3, wherein the second injector (9) is located on the side surface of the outer ring (2).

5. The slewing bearing according to claim 1, wherein the plug (5) comprises a sealing gasket (11).

6. The slewing bearing according to claim 1, comprising a closure (10) communicating the inside of the slewing bearing with the outside.
